# EUROPÄISCHE PATENTSCHRIFT

(11) **EP 2 536 546 B1**
(45) Veröffentlichungstag und Bekanntmachung des Hinweises auf die Patenterteilung: **25.10.2017**
(21) Anmeldenummer: 11703826.5
(22) Anmeldetag: 03.02.2011
(51) Int. Cl.: B29B 11/16

(54) **VERFAHREN ZUR HERSTELLUNG EINES PLATTENFÖRMIGEN HALBZEUGS AUS FASERVERBUNDWERKSTOFF, UND DAS SO ERHALTENE HALBZEUG**
METHOD FOR PRODUCING A FLAT SEMI-FINISHED PRODUCT FROM FIBER COMPOSITE MATERIAL, AND THE OBTAINED SEMI-FINISHED PRODUCT
PROCÉDÉ DE FABRICATION D'UN PRODUIT SEMI-FINI EN FORME DE PLAQUE CONSTITUÉ D'UN MATÉRIAU COMPOSITE FIBREUX, ET LE PRODUIT FINI AINSI OBTENU

(30) Priorität: 17.02.2010 DE 102010008370
(43) Veröffentlichungstag der Anmeldung: 26.12.2012
(73) Patentinhaber: SGL Automotive Carbon Fibers GmbH & Co. KG, 80939 München (DE)
(72) Erfinder: ORTLEPP, Gerald, 07407 Uhlstädt-Kirchhasel (DE); LÜTZKENDORF, Renate, 07426 Königsee (DE); REUSSMANN, Thomas, 07407 Rudolstadt (DE)
(74) Vertreter: Poxleitner, Simon
(86) Internationale Anmeldenummer: PCT/EP2011/000486
(87) Internationale Veröffentlichungsnummer: WO 2011/101094

(56) Entgegenhaltungen:
- EP-A2- 0 721 835
- WO-A1-2006/105682
- WO-A2-94/09972

## Beschreibung

Die vorliegende Erfindung betrifft ein Verfahren zur Herstellung eines plattenförmigen Halbzeugs aus Faserverbundwerkstoff, welches Fasern und wenigstens ein thermoplastisches Matrixmaterial enthält, wobei man aus faserhaltigen Abfällen oder Altteilen Fasern isoliert, diese mit thermoplastischen Fasern vermischt und in einem Krempelprozess flächig ablegt, so dass ein Faserflor erzeugt wird, den man in wenigstens einem nachfolgenden Schritt unter Wärmeeinwirkung zu einem Plattenmaterial verpresst.

Carbonfasem werden als Faserverstärkung von thermoplastisch oder duromer gebundenen Faserverbundwerkstoffen (FVW) eingesetzt. Zur Erreichung maximaler Verstärkungseffekte geschieht dies bislang überwiegend in Form endloser Carbonfaserstoffe wie zum Beispiel Filamentgarne, Multifilamentgame oder so genannter Rowings. Carbonfasern werden hingegen als Schnittfasem mit endlichen Faserlängen beispielsweise im Bereich von 20 mm bis 80 mm, wie sie aus dem Bereich der klassischen Textilverarbeitung bekannt sind, nicht am Markt angeboten, auch weil sie problematischer zu verarbeiten sind.

Carbonfaserstoffe werden seit einigen Jahren in zunehmenden Umfang als hochleistungsfähige Faserstoffbewehrung eingesetzt. Die Hauptanwendungen liegen beispielsweise im Flugzeugbau, Schiffbau, Fahrzeugbau und in Windkraftanlagen. Durch die immer breitere Massenanwendung nimmt die Menge an karbonfaserhaltigen Produktionsabfällen zu ebenso wie der Anfall ausgedienter Altteile.

Carbonfasem sind aufgrund ihres komplizierten Herstellungsprozesses sehr teuer. Die Preise bewegen sich zwischen etwa 15 €/kg bis zu etwa 300 €/kg für Spezialtypen. Aus wirtschaftlichen und umweltpolitischen Gründer ist es daher wünschenswert, Möglichkeiten zur Aufbereitung der Abfälle und Altteile zu schaffen und die darin enthaltenen Carbonfaseranteile neuen Anwendungen zuzuführen, in denen sie zumindest teilweise teure Primärcarbonfasern ersetzen können.

Obwohl es in der Industrie bereits Versuche gegeben hat, carbonfaserhaltige Produktionsabfälle wiederzuverwerten, indem Abfälle geschnitten und/oder gemahlen werden und beispielsweise zur Bewehrung in Kunststoffen oder Baustoffen eingesetzt werden, wird bislang überhaupt nur ein kleiner Teil dieser Abfälle gesammelt und vermarktet. Für große Mengen karbonfaserhaltiger Abfälle gibt es bislang keine hochwertige Wiederverwertung, so dass sie als Müll entsorgt werden müssen.

Die Herstellung von primären Carbonfasern erfolgt nach dem Stand der Technik üblicherweise entweder aus geeigneten organischen Vorläuferfasern wie beispielsweise Polyacrylnitril (PAN) oder Viskosefasern durch kontrollierte Pyrolyse oder aus Pech, wobei in diesem Fall durch Schmelzspinnen zunächst eine Pechfaser hergestellt wird, die dann oxidiert und karbonisiert wird. Ein entsprechendes Verfahren ist beispielsweise aus der EP 1 696 057 A1 bekannt. Dort werden die aus Pech hergestellten Primärfasern zu Stapelfasermatten verarbeitet, in denen die Fasern eine Ausrichtung in einer bevorzugten Richtung haben. Das bekannte Verfahren umfasst unter anderem einen Kämmprozess zur Parallelisierung der Fasern. Hier wird jedoch aus einem Carbonfaserflor letztlich ein Garn und somit ein linienförmiges Endprodukt hergestellt.

Grundsätzlich ist es aus dem Stand der Technik bekannt, ein bahnförmiges konsolidiertes Halbzeug aus einem Hybridband herzustellen, in dem Verstärkungsfasern endlicher Länge und thermoplastische Matrixfasern enthalten sind. In der DE 101 51 761 A1 wird ein derartiges Verfahren beschrieben, bei dem zunächst ein Kardenband aus thermoplastischen Matrixfasern und Naturfasern hergestellt wird, welches dann einen Speicher, eine Führung und schließlich eine Legeeinheit durchläuft. Nach Erwärmung in einer Heizstrecke und Konsolidierung wird ein bahnförmiges Halbzeug erhalten. In dieser Schrift wird auch erwähnt, dass anstelle der Naturfasern auch Kohlefasern als Verstärkungsfasern verwendet werden können.

Die WO 94/09972 A2 beschreibt ein Verfahren zur Herstellung von Verbundmaterialien mit gerichteten diskontinuierlichen Verstärkungsfasern bei dem durch Kardieren einer Mischung aus thermoplastischen Fasern und Verstärkungsfasern zunächst eine Faserstoffbahn und daraus ein Faserband hergestellt wird. Es werden dann mehrere Faserbänder miteinander verschmolzen zur Herstellung einer kontinuierlichen thermoplastischen Phase, welche dann die diskontinuierlichen Verstärkungsfasern umgibt. In dieser Schrift wird auch die Verwendung von Carbonfasem als Verstärkungsfasern erwähnt, wobei es sich jedoch um herkömmliche Carbonfasem aus primärer Herstellung handelt.

In der DE 10 2008 002 846 A1 ist ein Abfallaufbereitungsverfahren beschrieben, in dem faserverstärkte oder faserhaltige Halbzeuge recycelt werden. Dabei werden die in einem Matrixwerkstoff gebundenen Fasern von dem Matrixwerkstoff getrennt und die erhaltenen freien Fasern werden unmittelbar danach mit einem Bindemittel benetzt. Die Trennung der Fasern aus dem Halbzeug erfolgt jedoch in einem Ofen, also durch Pyrolyse. Endprodukt sind bei diesem Verfahren Faserbündel aus benetzten Fasern, zu deren weiterer Verarbeitung sich in der Druckschrift keine Angaben finden.

Die DE 198 45 863 beschreibt ein Strukturelement, welches unidirektionale Faserstränge aus kohlefaserverstärktem Kunststoff umfasst, die jeweils in eine Umhüllung eingebettet sind. Bei diesen Strukturelementen, welche für den Flugzeugbau vorgesehen sind, sollen große unidirektionale Steifigkeiten erzielt werden. Es werden hier jedoch Faserstränge mit Endlosfasern verwendet. Das Dokument enthält keinen Hinweis im Hinblick auf die Verwendung von Fasern aus dem Recycling von faserhaltigen Abfällen oder Altteilen.

Aus der DE 197 39 486 A1 ist ein Verfahren zur Herstellung eines plattenförmigen Halbzeugs aus Faserverbundwerkstoff der eingangs genannten Gattung bekannt geworden, bei dem ein recycliertes thermoplastisches Material, nämlich Faserabfälle aus der Teppichherstellung mit einem Abfallmaterial aus der Himmelherstellung gemischt und mittels einer Krempelmaschine gekrempelt wird. Die thermoplastischen Fasern können aus Polypropylen, Polyethylen, Nylon oder PET bestehen. Diese Fasern werden vor der weiteren Verarbeitung in bis etwa 50 mm lange Streifen geschreddert. Das Abfallmaterial aus der Himmelherstellung wird durch Rollen, die nadelartige Erhebungen besitzen, auseinandergezupft und in Streifen geteilt. Beide Abfallfasermaterialien werden gemischt und mittels einer Krempelmaschine gekrempelt. Das Dokument enthält keine weiteren Ausführungen dazu, dass Maßnahmen für eine gezielte Ausrichtung (Orientierung) der Fasern getroffen werden. Weiterhin finden sich in dieser Druckschrift keine Anregung für die Verwendung von Carbonfasem aus Abfällen.

In der DE 197 39 486 A1 wird erläutert, dass derartig hergestellte Produkte lediglich für "dekorative Karosserieteile, einschließlich solcher, die zur Stoßabsorption dienen..." geeignet sind. Die Ursachen für diese Einsatzeinschränkungen sind, dass in diesem Verfahren zum einen die aus dem Recycling von Dachhimmeln resultierenden Glas- und Polyesterfasern mit einem thermoplastischen Binder eingesetzt werden und dass zum anderen die Krempeltechnik lediglich zur Mattenbildung nicht jedoch für eine gezielte und hohe Ausrichtung der Verstärkungsfasern in einer Vorzugsrichtung qualifiziert wurde.

Die Aufgabe der vorliegenden Erfindung besteht darin, ein Verfahren zur Herstellung eines plattenförmigen Halbzeugs aus Faserverbundwerkstoff der eingangs genannten Art zur Verfügung zu stellen, bei dem kostengünstiger erhältliche Carbonfasern als Verstärkungsfasern eingesetzt werden können und ein plattenförmiges Halbzeug mit einer lastgerechten Anordnung der Verstärkungsfasern realisierbar ist. Ein derartiges plattenförmiges Halbzeug soll sich insbesondere für die Herstellung von Strukturbauteilen für hohe mechanische Belastungen eignen.

Die Lösung dieser Aufgabe liefert ein Verfahren der eingangs genannten Gattung mit den kennzeichnenden Merkmalen des Hauptanspruchs.

Erfindungsgemäß ist vorgesehen, dass man aus carbonfaserhaltigen Abfällen oder Altteilen endliche Carbonfasern, Carbonfaserbündel oder deren Mischung isoliert, diese mit thermoplastischen Fremdfasern vermischt, in einem Krempelprozess flächig ablegt und ausrichtet, so dass ein Faserflor mit einer gezielten Orientierung der Fasern (in Längsrichtung) erzeugt wird, den man in wenigstens einem nachfolgenden Schritt unter Wärmeeinwirkung zu einem Plattenmaterial verpresst.

Aus Recyclingprozessen werden kostengünstig Hochleistungscarbonfasern gewonnen, die in einem mattenartigen Halbzeug gemeinsam mit thermoplastischen Fremdfasern gezielt in einer Vorzugsrichtung abgelegt werden, so dass eine lastgerechte Verstärkungsfaseranordnung realisiert wird.

Carbonfasem lassen sich nur schwer mittels herkömmlicher Krempeltechnik verarbeiten und insbesondere in einer bestimmten Vorzugsrichtung in einem Krempelflor ausrichten, da sie glatt sind und keine Kräuselung aufweisen. Überraschenderweise gelang es nun durch Zumischung von textilen Fremdfasern wie z.B. Polypropylen den Faserorientierungsgrad auch der Carbonfasem wesentlich und definiert zu erhöhen. Der Grad der Längsausrichtung der Carbonfasern im Krempelflor ist unter anderem abhängig von der Geometrie der zugemischten Fremdfaser, insbesondere von der Faserlänge sowie vom zugegebenen Anteil. Geringe Fremdfaseranteile, beispielsweise rund 10 %, und kurze Fremdfasem, beispielsweise in der Größenordnung 35-40 mm, ergeben geringere Faserausrichtungsgrade. Lange Fremdfasern beispielsweise über 60 mm sowie Anteile von beispielsweise mehr als 30 % ergeben eine hohe Faserausrichtung der Carbonfasem.

Das Ausnutzen von Hilfsfasern zur gezielten Beeinflussung des Faserorientierungsgrades von Carbonfasem in einem Krempelflor wird in keiner der zuvor zitierten Druckschriften aus dem Stand der Technik beschrieben.

Die Carbonfasem können aus Altteilen oder Abfällen beispielsweise der Produktgattung Gewebe, Gelege, Geflechte oder deren Sandwich in Form von Preformen und/oder aus Abfallmaterialien oder Altteil der Produktgattung Faserverbundwerkstoff in einer krempelbaren Faser und/oder Faserbündelform in ungeordneter Wirrlage und mit mittleren Faser- bzw. Faserbündellängen von bevorzugt im Bereich von 20 bis 150 mm, weiter vorzugsweise etwa 40 mm bis etwa 70 mm gewonnen und separiert werden. Eine beispielhafte geeignete Vorrichtung zum Auftrennen textiler Faserbündel in Einzelfasern wird in der DE 10 2009 023 641 A1 beschrieben, auf deren Inhalt hiermit Bezug genommen wird. Als separierende Prozesse sind weiterhin beispielsweise das Reißen oder die Aufbereitung von harten Carbonfaserverbundwerkstoffen (CFK) mittels Pyrolyse oder Lösungsmittelbehandlung bekannt.

Erfindungsgemäß wird bevorzugt eine möglichst homogene Mischung aus thermoplastischen Bindefasem und endlichen Carbonfasern, Carbonfaserbündeln oder deren Mischung durch einen Krempelprozess zu einer Fasermatte verarbeitet. Die Carbonfasern werden mehr oder minder gezielt orientiert, Anteile der thermoplastischen Fasern werden durch Hitze in einen klebenden Zustand gebracht, verdichtet, zu einer Plattenware verpresst und danach abgekühlt.

Das erfindungsgemäße Verfahren ermöglicht es, Carbonfasern, Carbonfaserbündel oder deren Mischung, die beispielsweise aus textilen Produktionsabfällen, verklebten oder ausgehärteten Produktionsabfällen, aus aufbereiteten Alt-CFK-Bauteilen oder dergleichen als Verstärkungsfasern separiert wurden, einzusetzen, womit ein kostengünstigeres Ausgangmaterial zur Verfügung steht und die in den genannten Altstoffen enthaltenen Carbonfasem erneut einer sinnvollen Verwendung zugeführt werden. Das erfindungsgemäße Verfahren ist somit in vorteilhafter Weise nicht auf geschnittene Gewebereste als Ausgangsmaterial beschränkt. Andere in wesentlich größeren Mengen anfallende Abfallformen wie Gelege, Geflechte, Stacks, verklebte Mehrschichthalbzeuge bis hin zu ausgehärteten CFK-Resten und Altteilen können als Quelle für daraus isolierte Carbonrecyclingfasern dienen und sind in diesem Verfahren ebenfalls einsetzbar. Gleiches gilt für separierte Recyclingfasern, Recyclingfaserbündel oder deren Mischung, die aus eigenständigen Prozessen wie dem Reißen, einer Hammermühlenbehandlung oder einem thermisch/chemischen Aufbereitungsverfahren resultieren. Sie lassen sich aufgrund ihres hohen Zerfaserungsgrades bis zu den Einzelfasern und der vorliegenden Wirrlage und Verschlingungen in einem Haufwerk mittels herkömmlicher Verfahren nicht gezielt und definiert orientieren. Das vorliegende Verfahren ermöglicht dies jedoch und lässt es daher zu, auch Fasern/Faserbündel solcher Herkunft flächenmassegleichmäßig zu einem Prepreg zu verarbeiten.

Wenn es sich um Carbonabfälle oder Altteile handelt, die mit klebenden Harzen imprägniert sind, oder um CFK-Bauteile oder Bauteilreste, bei denen die Carbonfasem in einem Festkörperverbund eingebettet sind, werden die Carbonfasem zunächst von störenden Matrixsubstanzen befreit. Hierzu können beispielsweise Pyrolysetechniken eingesetzt werden oder die Abfälle werden mit überkritischen Lösungsmitteln behandelt. Als Produkt aus diesen Trennprozessen resultieren endliche Carbonfasern, Carbonfaserbündel oder deren Mischung als Haufwerk.

Ein bevorzugtes Merkmal des Verfahrens gemäß der vorliegenden Erfindung ist, dass man als Ausgangsmaterial mindestens einen Anteil an Carbonfasem einsetzt, die aus der Aufbereitung textilartiger Carbonabfälle und/oder aus dem stofflichen Recycling von CFK-Bauteilen hervorgegangen sind sowie gegebenenfalls einen Anteil an geschnittenen Primärfasern (Neuware).

Zunächst erzeugt man mindestens eine Schicht aus endlichen Carbonfasern durch flächiges Ablegen von endlichen Carbonfasem in einem Krempelprozess. Anders als im Stand der Technik stellt man nicht zunächst ein Kardenband her, sondern man verarbeitet eine in eine Krempelanlage einlaufende Faserschicht unmittelbar zu einem dünnen und massegleichmäßigen Faserflor.

Gemäß einer bevorzugten Weiterbildung der Erfindung geht man so vor, dass man eine weitgehend homogene Mischung aus thermoplastischen Wirrbindefasern und endlichen Carbonwirrfasern und/oder ungeordnet vorliegenden Carbonfaserbündeln durch einen Krempelprozess ausrichtet, zu einer Fasermatte verarbeitet, mindestens Anteile der thermoplastischen Fasern durch Wärme in einen klebenden Zustand bringt, verdichtet und zu einem Plattenmaterial verpresst und danach abkühlt.

Die erfindungsgemäß eingesetzten Carbonfasern bzw. Carbonfaserbündel weisen bevorzugt eine mittlere Faserlänge von 10 mm bis 150 mm, vorzugsweise von 25 mm bis 150 mm, auf. Bei Einsatz sehr kurzer Carbonfasem bzw. Carbonfaserbündel mit einer mittleren Faserlänge von 10 mm bis 15 mm wird die Krempelbarkeit durch einen notwendigen Anteil längerer Trägerfasern bestimmt. Hierbei gilt, je kürzer die Carbonfasern in einem umso größeren Anteil sollten zusätzlich längere Trägerfasern der Krempel mit zugeführt werden. Dies können einerseits längere Carbonfasem als auch längere nicht auf Carbon basierende Fremdfasern sein.

Im Rahmen der vorliegenden Erfindung gibt es verschiedene bevorzugte Möglichkeiten, die Carbonfasem und/oder Carbonfaserbündel mit dem thermoplastischen Matrixmaterial zu vermischen. Beispielsweise kann man am Eingang einer Krempelanlage Carbonfasern und thermoplastische Fasern jeweils als gesonderte Schicht zuführen und diese in der Krempel mischen.

Man kann beispielsweise eine thermoplastische Komponente in Form endlicher Fasern mit den Carbonfasem vor oder während einer Schichtbildung innig und homogen miteinander vermischen.

Man kann auch beispielsweise einzelne Faserkomponenten, nämlich Carbonfasern, thermoplastische Matrixfasern und gegebenenfalls weitere Fasern anderer Zusammensetzung jeweils sortenrein in unterschiedlichen Schichten als Faserflore oder Vliesstoffbahnen übereinander flächig ablegen und Maßnahmen treffen, um eine ausreichende Durchdringung aller Schichten durch die thermoplastische Matrixkomponente und eine kompakte Verbindung der Schichten untereinander nach der thermischen Verfestigung zu erzielen.

Bevorzugt ist im Rahmen der vorliegenden Erfindung, dass man eine Mischung aus Karbonwirrfasern, wirren Carbonfaserbündeln oder deren Mischung und thermoplastischen Bindefasern durch einen eigenständigen Fasermischprozess vor der Mattenherstellung oder durch einen Fasermischprozess während der Mattenbildung erzeugt.

Ein erfindungsgemäßes Halbzeug kann beispielsweise auch neben Carbonfasern aus carbonfaserhaltigen Abfällen oder Altteilen einen Anteil an Carbonfasem in Form endlicher Primärware (Neuware) enthalten. Ebenso kann dieses plattenförmige Halbzeug beispielsweise auch neben Carbonfasem weitere verstärkend wirkende Faseranteile in endlicher Form, insbesondere Para-Aramid, Glasfasern, Naturfasern, nicht schmelzende Chemiefasern und/oder höher als die Matrixfasern schmelzende Fasern enthalten.

Als Techniken zur Herstellung erfindungsgemäßer insbesondere masse- oder volumengleichmäßiger carbonfaserhaltiger Flächengebilde können je nach der Art der einzusetzenden endlichen Carbonfasern, vorrangig in Abhängigkeit zu vorliegender Faserlänge, Faserlängenverteilung, beispielsweise an sich bekannte Trockentechniken wie das Vlies-Krempeln verwendet werden. Carbonfaserausgangsmaterial für das Verfahren sind beispielsweise:
- zerkleinerte Primärfasern ,
- zerkleinerte und/oder zerfaserte Gelege-, Gewebe-, oder Geflechtreste,
- zerkleinerte und /oder zerfaserte Fadenabfälle, Rovingreste, Randbeschnitt aus der
   Gelegefertigung oder Restspulenmaterial,
- zerkleinerte und/oder zerfaserte und/oder thermisch oder mit einem Lösungsmittel vorbehandelte Prepregabfälle oder
- zerkleinerte und/oder zerfaserte und thermisch oder mit einem Lösungsmittel behandelte harzhaltige Abfälle, Hart-CFK-Teile und Altbauteile.

Nachfolgend werden beispielhaft konkretere und bevorzugte Ausgestaltungsvarianten des erfindungsgemäßen Verfahrens näher erläutert.

Faserförmige Zumischanteile wie die später bindend wirkenden thermoplastischen Faserstoffe können beispielsweise in einem eigenständigen Prozessschritt vor der Schichtbildung z.B. über eine textile Fasermischstraße oder unmittelbar während der Schichtbildung z.B. in einer Krempel innig homogen mit den Carbonfasern vermischt werden. Beispielsweise mittels einer textilen Krempel die bezüglich ihrer Walzenbeschläge an die Verarbeitung von Carbonfasem angepasst und die gegen den Austritt elektrisch leitfähiger Carbonfaserstäube nach außen abgeschottet ist, werden die Carbonfasem in einer innigen und homogenen Mischung zu einem flächenmassegleichmäßigen Faserflor verarbeitet. Dieser Faserflor mit Flächenmassen von bevorzugt etwa 15 bis 60 g/m² wird beispielsweise in einem nachfolgenden Täfelprozess bis zur gewünschten Endflächenmasse des thermisch verfestigten Halbzeuges mit Längs- oder Quertäfler getäfelt oder durch das Übereinanderfahren einer Anzahl von n Floren von n in Reihe arbeitenden Krempeln erreicht.

Über die Parameter der Florflächenmasse, die aus der Krempel ausgetragen wird, und den Täfelprozess kann die Flächenmasse der Florschichtung definiert eingestellt werden. Über die Wahl der Krempelparameter, insbesondere das Verhältnis von Fasereinlaufgeschwindigkeit und Floraustragsgeschwindigkeit lassen sich unterschiedliche Faserlängsorientierungen im Krempelflor erzielen. Diese Einstellung an der Krempel und/oder ein zusätzlich nachfolgendes Vliesstrecken eines vorher getäfelten oder mehrfach doublierten Krempelflores lassen einen solchen Grad der Faserausrichtung entstehen, dass in einer daraus hergestellten FVW-Platte mit Thermoplastmatrix, beispielsweise Polypropylenmatrix, gezielt Anisotropien der Verbundfestigkeiten und/oder Verbundsteifigkeiten in einem Bereich von insbesondere 1:1,5 bis 1:10, vorzugsweise 1:2 bis 1:7 eingestellt werden können. Die Bestimmung der angestrebten Faserausrichtung (Anisotropie) erfolgt an einer Faserverbundwerkstoff-Platte (FVW-Platte).

Die Herstellung einer solchen FVW-Platte erfolgt dabei zum Beispiel nach folgenden Vorgaben:
- Stanzen von Krempelfloren bestehend aus einer Mischung von Carbonfasem und Polypropylenfasern in Stücken von x cm Länge und y cm Breite, die beispielsweise auch quadratisch sein können;
- überschreitet der Carbonfaseranteil im Krempelflor etwa 40% erfolgt bevorzugt ein zusätzliches Ausstanzen von PP-Folie in Stücken von etwa gleicher Länge und Breite
- es werden mehrere Schichten der Carbonkrempelflore übereinander gelegt, wobei die Flore in gleicher Laufrichtung übereinander abgelegt werden. Übersteigt der Carbonanteil im Krempelflor etwa 40%, werden bevorzugt die zusätzlich ausgestanzten PP-Folien, beginnend auf Ober- und Unterseite, bei Erfordernis zusätzlich alternierend zwischen den Krempelflorschichten eingelegt;
- Verpressen dieses so gebildeten Sandwiches in einer Plattenpresse bei Temperaturen von beispielsweise etwa 200°C und bei einem an der Presse eingestellten Druck von beispielsweise etwa 400 N/cm²;
- nach dem Abkühlen werden aus dem CF/PP-Verbund bevorzugt rechteckige Probenkörper, einmal längs und einmal im 90°-Winkel zur Faserorientierung geschnitten, wobei daran beispielsweise die Zugspannungen in [MPa] und der Zug-E-Modul [GPa] ermittelt werden können;
- wobei ein Quotient aus den beiden Mittelwerten von beispielsweise jeweils mindestens 5 Einzelmessungen der Zugspannungen und/oder des Zug-E-Moduls in Krempellaufrichtung und quer zur Krempellaufrichtung die Anisotropie ergibt.

Nach den Prozessschritten Fasermischen, Krempeln, Täfeln/Doublieren, erforderlichenfalls Vliesstrecken, kann dieses lose flächige, masse- und mischungsgleichgleichmäßige Fasergelege aus endlichen, gerichteten Carbonfasem und textilen Thermoplastfasern so stark aufgeheizt werden, dass die Thermoplastfasern erweichen oder schmelzen, anschließend kann über Pressdruck kompaktiert, und unter Druck oder ohne zusätzlichen äußeren mechanischen Pressdruck abkühlend verfestigt werden. Die so herstellbare Bahnenware kann beispielsweise anschließend aufgewickelt, zu Platten geschnitten oder in unregelmäßig flächige Formen gestanzt werden.

Bevorzugt bestimmt der Anteil der Thermoplastkomponente die erreichbare Kompaktheit des Produktes. Technologische Grenzen des Anteils von thermoplastischen Fasern in den Carbonfasern bestehen nicht. Aus Produktsicht wird sich die Anwendung im Bereich von 5 bis 95% Carbonfaseranteil, vorzugsweise im Bereich von 30% bis 80% Karbonfasern bewegen.

Neben den Carbonfasem können weitere endliche Faserstoffe wie beispielsweise Naturfasern, para-Aramidfasem, Glasfasern, Keramikfasern oder Polyacrilnitrilfasern in den Verfahrensprozess einfließen. Diese werden analog der Thermoplastfasern vor dem Krempeln oder während des Krempelns innig und homogen miteinander gemischt.

Das innig homogene Mischen an der Krempel erfolgt bevorzugt dadurch, dass der Krempel eine flächenmassegenaue und flächenmassekonstante Faserschichtung zugeführt wird, in der die in der Krempel zu mischenden unterschiedlichen Faserstoffe als übereinander liegende flächenmassegenaue und flächenmassekonstante Faserschichten zugeführt werden. Derartige flächenmassegenaue und flächenmassekonstante Schichtungen können beispielsweise durch das Übereinanderfahren von Faserschüttungen aus in Reihe geschalteten konventionellen Krempelspeisungen wie beispielsweise Füllschächte, Faserspeiser oder über gering verfestigte, separate Vliesstoffschichten erfolgen. Die faserstoffliche Zusammensetzung der einzelnen Schichten kann jeweils unterschiedlich sein, wobei einzelne Schichten bereits aus einer definierten Mischung unterschiedlicher Faserstoffe bestehen können.

Die durch einen derartigen Krempelprozess erzeugbaren Faserflore mit gerichteten Carbonfasem können beispielsweise nach dem Krempelprozess zusätzlich mit bekannten Verstärkungsstrukturen aus Endlosfaserstoffen wie beispielsweise Fäden, Rovings, Gelegen, Geweben, Gittern, Geflechten und Gestricken stofflich kombiniert werden, die im thermischen Verfestigungsprozess mit den Faserflorschichten der Krempel verbunden ein Halbzeug für Faserverbundwerkstoffherstellung mit Thermoplastmatrix bilden.

Entsprechend den vorliegenden Carbonfaserlängen können diese direkt in den Prozess der Schichtbildung einfließen oder zur Verbesserung der Verarbeitbarkeit weiter zerkleinert und/oder beispielsweise mit einer Schlichte, haftvermittelnden Substanzen oder anderen im späteren Kunststoff wirksam werdenden zusätzlichen Mitteln wie Flammhemmern, Farbstoffen, Entformungshilfen oder Tribologiehilfsmittel ausgerüstet bzw. gemischt werden. Weiter ist es möglich, zu den Carbonfaserstoffen zusätzlich funktionell wirkende Fremdfaserstoffe beispielsweise zur Schlagzähmodifizierung oder mechanischen Verstärkung wie para-Aramid, Glasfasern, Naturfasern oder nichtschmelzende Chemiefasern bzw. höher als die Matrixfaser schmelzende Fasern zuzumischen. Faserförmige Zumischanteile wie die später bindend wirkenden thermoplastischen Faserstoffe können in einem eigenständigen Prozessschritt vor der Schichtbildung, z.B. über eine textile Fasermischstraße, oder unmittelbar während der Schichtbildung, z.B. in einer Krempel, mit den übrigen Faseranteilen innig und möglichst homogen vermischt werden. Nutzt man die Möglichkeiten einer Systemmischung, werden die einzelnen Faserkomponenten sortenrein beispielsweise in unterschiedlichen Schichten als Faserflore oder Vliesstoffbahnen übereinander abgelegt. Wichtig ist hier, dass die thermoplastische Bindekomponente alle Schichten ausreichend durchdringt, um so nach der thermischen Verfestigung eine kompakte Verbindung aller Schichten untereinander sicherzustellen. Erreicht werden kann dies durch eine homogene Mischung aller Komponenten untereinander, mit beispielsweise einem alternierenden Aufbau dünner Schichten mit Thermoplast und Verstärkungskomponente oder beispielsweise durch ein intensives Durchstechen von thermoplastischen Bindefasem durch die Carbonfaserschicht mit einem Vernadelungsvorgang. Bei dünnen Schichten oder einer guten Durchtränkbarkeit mit thermoplastischer Schmelze genügt ein Sandwich, in dem die nichtschmelzenden Komponenten als Kernlage angeordnet sind.

Als thermoplastisch bindende Komponenten kommen in der Regel die unterschiedlichsten aus dem Stand der Technik bekannten thermoplastischen Kunststoffmatrices in Betracht. Dies reicht vom niedrig schmelzenden Polyethylen über Polypropylen, Polyamide, bis hin zu den hoch schmelzenden Thermoplasten PEEK oder PEI. Die thermischen Verfestigungsparameter wie Temperatur, Verweilzeit, Druck und eventuell Einsatz von Inertgasatmosphäre müssen an die Besonderheiten dieser Polymere angepasst werden. Die einsetzbaren Formen der thermoplastischen Bindekomponenten reichen von kleinen Partikeln wie Pulvern über Kurzfasern, textile Langfasern, Vliesstoff- oder Faserstoffschichten, Spinnvliesstoffen, Folien bis hin zu Polymerschmelzen.

Nach der Kombination der endlichen Carbonfasern mit dem thermoplastischen Binder in einer flächigen Schichtanordnung mit einem möglichst konstanten Masseverhältnis von Carbonfaser zu Thermoplast wird diese Schichtung aufgeheizt, so dass die Thermoplastkomponente erweicht oder schmilzt. Bei Einsatz einer Polymerschmelze wäre dieser Schritt allerdings nicht erforderlich. Hier kann der Auftrag beispielsweise über Breitdüsen auf die Carbonfaserschicht erfolgen - anschließend über Druck kompaktiert und unter Druck oder ohne zusätzlichen äußeren mechanischen Pressdruck abkühlend verfestigt werden.

Der Anteil der Thermoplastkomponente bestimmt die erreichbare Kompaktheit der Plattenware. Die Untergrenze des Thermoplastanteils liegt vorzugsweise bei etwa 5%, wobei für einen nachweisbaren Verfestigungseffekt Carbonfasern und Thermoplastkomponente möglichst homogen innig miteinander vermischt werden sollten. Bei Sandwichverfahren sind Mindestbindeanteile von etwa 15 bis 25% vorteilhaft.

Über den Anteil der Thermoplastkomponente kann beispielsweise die Härte des plattenförmigen Halbzeugs in einem weiten Bereich variiert werden. Dies reicht von einem kompakten porenfreien Zustand über zunehmende Porigkeiten bis hin zu einem thermisch verfestigten Faservlieszustand geringer Dichte. Zusätzlich zu den verwendeten Carbonfaserstoffen können weitere Faserstoffe in endlicher Form verwendet werden. Diese können analog der Carbonfaserkomponenten durch Fasermischprozesse vor oder während der Schichtbildung oder als separate Systemkomponenten bei der Materialschichtung zugeführt werden.

Gegenstand der vorliegenden Erfindung ist weiterhin ein plattenförmiges Halbzeug aus einem Faserverbundwerkstoff, welches in einem Verfahren der zuvor genannten Art hergestellt wurde und bei dem der Anteil des thermoplastischen Matrixmaterials im Halbzeug in einem Bereich von zwischen etwa 5 % und etwa 95 %, vorzugsweise bei etwa 30 % bis etwa 70 % liegt.

Bevorzugt ist bei einem solchen plattenförmigen Halbzeug, dass die Carbonfasern, Carbonfaserbündel oder deren Mischung endliche Längen aufweisen und/oder über eine Längenverteilung verfügen und die Carbonfasern und/oder Carbonfaserbündel im Halbzeug so vorliegen, dass Anteile davon nicht das gesamte Halbzeug unterbrechungsfrei durchziehen.

Weiterhin ist es bevorzugt so, dass dieses plattenförmige Halbzeug aus endlichen Carbonfasern, Carbonfaserbündeln oder deren Mischung und weiteren endlichen Verstärkungsfasern hergestellt ist, insbesondere ausgewählt aus Naturfasern, para-Aramidfaserstoffen und Glasfasern. Beispielsweise kann ein derartiges plattenförmiges Halbzeug auch mit endlosen Verstärkungsfasern wie Endloskarbonrovings, para-Aramid- und/oder Glasfilamentgarnen in Form von Fäden, Gelegen, Geweben oder Gittern kombiniert werden.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird anhand von konkreten Ausführungsbeispielen die vorliegende Erfindung näher erläutert. Es versteht sich, dass diese Ausführungsbeispiele nur exemplarischen Charakter haben und die Erfindung in keiner Weise auf die darin genannten konkreten Maßnahmen und Parameter beschränkt ist.

### Ausführungsbeispiel 1

Eine homogene Fasermischung aus 70% Polypropylen der Feinheit 7dtex und einer Nennfaserlänge von 60mm und 30% Abfallcarbonfasern aus der Gelegefertigung mit einer mittleren Faserlänge von 65 mm wurden mit einer Krempel, die mit 3 Arbeiter/Wenderpaaren bestückt war, zu einem Faserflor der Flächenmasse von 25 g/m² verarbeitet. Durch den Krempelprozess wurde solch eine Faserlängsorientierung im Faserflor erzeugt, dass bei Verarbeitung von 10 Lagen dieses Flors durch Übereinanderlegen in gleicher Warenrichtung und Verpressen in einer Plattenpresse bei 200°C und einem an der Presse eingestellten Druck von 400 N/cm² ein Faserverbundwerkstoff erhalten wurde, welcher in Laufrichtung des Krempelflores im Faserverbundwerkstoff einen um den Faktor 5 höheren Zug-E-Modul aufwies als im Winkel von 90° dazu.

### Ausführungsbeispiel 2

### Verarbeitung einer Faser/Faser-Mischung zu plattenförmigen Halbzeugen

Für die Herstellung von plattenförmigen carbonfaserhaltigen Halbzeugen wurden aus 100% Carbongewebeabfällen gewonnene Carbonrecyclingfasern mit einer mittleren Faserlänge von 40 mm und eine handelsübliche, textile PA6-Stapelfaser 3,3 dtex, 60 mm als Ausgangsmaterial eingesetzt. Beide Materialien wurden in einem Masseverhältnis von 30% PA6 und 70% Recyclingcarbonfasern (RCF) über ein textilindustrieübliches Mischbett und anschließende Mischöffnertechnik als sogenannte Flockenmischung intim miteinander vermischt. Diese Fasermischung wurde anschließend einer Krempelanlage vorgelegt. Durch den Krempelprozess wurde solch eine Faserlängsorientierung im Faserflor erzeugt, dass bei Verarbeitung von 10 Lagen dieses Flors durch Übereinanderlegen in gleicher Warenrichtung mit Zwischenlegen von PA6-Folien auf einen Endcarbonfasergehalt von 35 % und Verpressen ineiner Plattenpresse bei 240 °C ein Faserverbundwerkstoff erhalten wurde, welcher in Laufrichtung des Krempelflores im Faserverbundwerkstoff einen um den Faktor 3 höheren Zug-E-Modul aufwies als im Winkel von 90 ° dazu.

### Ausführungsbeispiel 3

### Verarbeitung einer flächigen Systemmischung zu plattenförmigen Halbzeugen

Auf einer Krempelanlage wurden unter Nutzung eines Quertäflers und einer anschließenden Vernadelungsmaschine 2 Vliesstoffbahnen mit einer Flächenmasse von 180 g/m² aus 100% einer handelsüblichen textilen PA6-Faser 3,3 dtex, 60 mm hergestellt. Die beiden Vliesbahnen wurde nur leicht mit 12 Stichen/cm² einmal von oben vernadelt. In einem folgenden Arbeitsschritt wurden 100% aus Gewebeabfällen gewonnene Recyclingcarbonfasern mit einer mittleren Faserlängen von 40 mm mittels speziell für die Verarbeitung von Carbonfasern technisch modifizierter Krempeltechnik zu einem flächigen Krempelflor flächenmassegleichmäßig mit 30 g/m² Krempelflor verarbeitet und dieses kontinuierlich aus der Krempel abgezogene Flor mit einem Quertäfler auf ein im Winkel von 90° dazu kontinierlich laufenden Ablageband quer und überlappend so abgelegt, dass eine Flächenmasse von 780 g/m² abgelegt wurde. Zwischen Ablageband und der aufzutäfelnden Carbonfaserflorschichtung wurde eine der vorher gefertigten Nadelvliesbahnen gelegt, so dass die Carbonfaserschichtung auf dem PA6-Nadelvlies angeordnet war.
Vor dem Einlauf in die nachfolgende Nadelmaschine wurde das zweite PA6-Nadelvlies mit 180 g/m² als Abdeckschicht aufgerollt, so dass damit ein Sandwich von 180g/m² PA6-Nadelvlies - 780 g/m² RCF-Florschichtung - 180 g/m² PA6-Nadelvlies aufgebaut wurde. Dieses Sandwich wurde mit jeweils 25 Stichen/cm² von oben und unten verfestigend vernadelt. Durch den Nadelvorgang wurden Anteile der PA6-Vliesdeckschichten durch die RCF-Schicht durchgenadelt, so dass es quasi zu einer gewissen Durchmischung von PA6 mit der RCF-Schicht kam, was sich für die Stabilität des späteren erreichbaren thermischen Verfestigungsgrades positiv auswirkte. Die so hergestellten Nadelvliese mit PA6-Außenschicht und RCF im Kembereich wurden als Stücke von 30 cm x 30 cm übereinandergelegt und mit einer Etagenpresse bei 240°C mit 50 bar 100s verpresst und anschließend abgekühlt. Von den resultierenden Platten wurden die noch unverfestigten weichen Kanten mit einer Schlagschere abgetrennt.

Nachfolgend wird das Arbeitsprinzip einer im Rahmen der vorliegenden Erfindung verwendbaren Krempel beispielhaft unter Bezugnahme auf die beiliegende Zeichnung näher beschrieben.

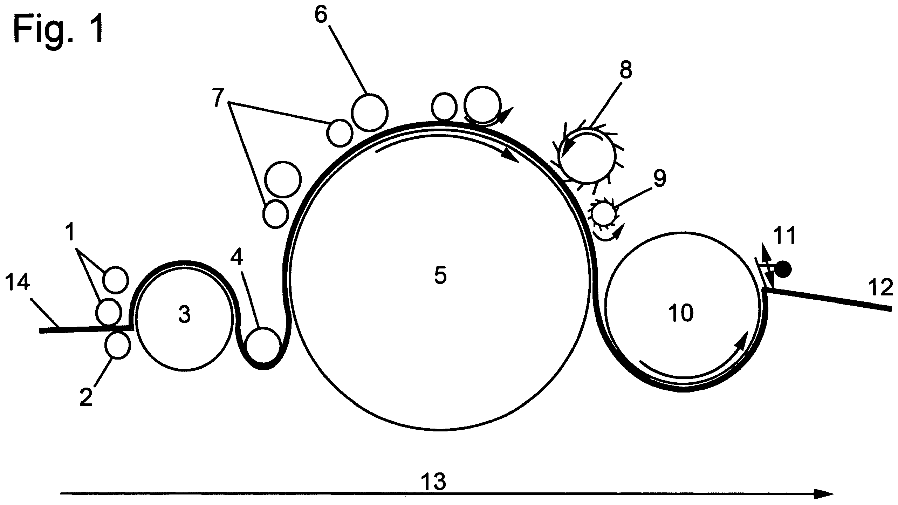

Dabei zeigt die Figur 1 eine schematisch vereinfachte Darstellung des Prinzips einer Krempelanlage, welche beispielsweise geeignet ist zur Herstellung eines Faserflors umfassend unter anderem Carbonfasern nach dem erfindungsgemäßen Verfahren.

Die Darstellung zeigt mindestens eine (in der Zeichnung links) in die Krempelanlage einlaufende Faserschicht 14, die zunächst über Einlaufwalzen 1, 2 auf einen sich gegenüber den Einlaufwalzen im umgekehrten Drehsinn rotierenden Vorreißer 3 gelangt. Zwischen diesem Vorreißer 3 und der sich im gleichen Drehsinn wie dieser Vorreißer drehenden Haupttrommel (Tambour) 5 ist eine Übergabewalze 4 angeordnet, die sich entgegengesetzt zu Vorreißer 3 und Haupttrommel 5 dreht. Am Umfang der Haupttrommel 5 sind in verschiedenen Umfangspositionen diverse Arbeiter 6 und Wender 7 angeordnet. Die Aufgabe dieser Einrichtungen besteht darin, die einlaufende Faserschicht 14 in der Krempelanlage bis zur Einzelfaser zu zerfasern und wieder zu einem dünnen und massegleichmäßigen Faserflor mit einer definierten Flächenmasse zu formieren. Dabei wird vorzugsweise eine Faserlängsorientierung angestrebt.

Hinter der Haupttrommel 5 ist nach einem Volant 8 mit Volantreiniger 9 eine zu dieser im entgegengesetzten Drehsinn rotierende Abnehmertrommel 10 angeordnet, an der sich an der stromabwärts gelegenen Seite ein Hacker 11 befindet. Von dieser Abnehmertrommel 10 wird ein Faserflor 12 in Form einer Endlosfläche mit einer Flächenmasse bis maximal etwa 80 g/m², vorzugsweise etwa 15-30 g/m², ausgetragen, wobei die im Flor anteilig vorhandenen Carbonfasem eine bevorzugte und definiert eingestellte Faserlängsausrichtung aufweisen.

### Bezugszeichenliste

1 Einlaufwalzen
2 Einlaufwalzen
3 Vorreißer
4 Übergabewalze
5 Haupttrommel (Tambour)
6 Arbeiter
7 Wender
8 Volant
9 Volantreiniger
10 Abnehmertrommel
11 Hacker
12 Faserflor mit bevorzugt längs ausgerichteten Carbonfasern
13 Materialfluss
14 einlaufende Faserschicht

## Patentansprüche

1. Verfahren zur Herstellung eines plattenförmigen Halbzeugs aus Faserverbundwerkstoff, welches Fasern und wenigstens ein thermoplastisches Matrixmaterial enthält, wobei man aus faserhaltigen Abfällen oder Altteilen Fasern isoliert, diese mit thermoplastischen Fasern vermischt und in einem Krempelprozess flächig ablegt, so dass ein Faserflor erzeugt wird, den man in wenigstens einem nachfolgenden Schritt unter Wärmeeinwirkung zu einem Plattenmaterial verpresst, **dadurch gekennzeichnet, dass** man aus carbonfaserhaltigen Abfällen oder Altteilen endliche Carbonfasern, Carbonfaserbündel oder deren Mischung isoliert, diese mit thermoplastischen Fremdfasern vermischt, in einem Krempelprozess flächig ablegt und ausrichtet, so dass ein Faserflor mit einer gezielten Orientierung der Fasern erzeugt wird, den man in wenigstens einem nachfolgenden Schritt unter Wärmeeinwirkung zu einem Plattenmaterial verpresst, wobei man zur gezielten und hohen Längsausrichtung der Carbonfasern in dem Krempelprozess thermoplastische Fremdfasern in einem derartigen Mischungsverhältnis und/oder mit einer solchen Fasergeometrie zumischt, dass in dem Faserflor eine Faseranisotropie in einem Bereich von mindestens 1:2 eingestellt wird.

2. Verfahren nach Anspruch 1, **dadurch gekennzeichnet, dass** die zugemischten thermoplastischen Fremdfasern Faserlängen von etwa 25 mm bis etwa 120 mm, vorzugsweise von etwa 40 mm bis etwa 100 mm aufweisen.

3. Verfahren zur Herstellung eines plattenförmigen Halbzeugs nach Anspruch 1 oder 2, **dadurch gekennzeichnet, dass** man eine weitgehend homogene Mischung aus thermoplastischen Wirrbindefasern und endlichen Carbonwirrfasern, wirren Carbonfaserbündeln oder deren Mischung durch einen Krempelprozess ausrichtet, zu einer Fasermatte legt, mindestens Anteile der thermoplastischen Fasern durch Wärme in einen klebenden Zustand bringt, verdichtet und zu einem Plattenmaterial verpresst und danach abkühlt.

4. Verfahren nach einem der Ansprüche 1 bis 3, **dadurch gekennzeichnet, dass** die eingesetzten Carbonfasern, Carbonfaserbündel oder deren Mischung eine mittlere Faserlänge von 10 mm bis 150 mm, vorzugsweise von 25 mm bis 150 mm, aufweisen.

5. Verfahren nach einem der Ansprüche 1 bis 4, **dadurch gekennzeichnet, dass** man mindestens einen Anteil an Carbonfasern einsetzt, die aus der Aufbereitung textilartiger Carbonabfälle und/oder aus dem stofflichen Recycling von CFK-Bauteilen hervorgegangen sind sowie gegebenenfalls einen Anteil an geschnittenen Primärfasern (Neuware).

6. Verfahren nach einem der Ansprüche 1, 2 oder 4 bis 6, **dadurch gekennzeichnet, dass** man eine Mischung aus Carbonfasern, Carbonfaserbündeln oder deren Mischung und thermoplastischen Bindefasern durch einen Fasermischprozess während der Mattenbildung erzeugt.

7. Verfahren nach einem der Ansprüche 1 bis 6, **dadurch gekennzeichnet, dass** man einen gezielten Orientierungsgrad von zunächst richtungsungeordnet vorliegenden Carbonfasern, Carbonfaserbündeln oder deren Mischung mit einer Krempel erzeugt, derart, dass in einem Faserverbundwerkstoff (FKV) eine Anisotropie der Verbundfestigkeiten und/oder Verbundsteifigkeiten in einem Bereich von 1 : 1,5 bis 1 : 10 erreicht wird.

8. Verfahren nach einem der Ansprüche 1 bis 7, **dadurch gekennzeichnet, dass** eine Anisotropie der Verbundfestigkeiten und/oder Verbundsteifheiten nach einem Täfelprozess eines Faserflors zu einer Florschichtung durch ein zusätzliches Vliesverstrecken beeinflusst wird.

9. Plattenförmiges Halbzeug aus einem Faserverbundwerkstoff, hergestellt aus Faserverbundwerkstoff, enthaltend Fasern und wenigstens ein thermoplastisches Matrixmaterial, hergestellt, indem man aus carbonfaserhaltigen Abfällen oder Altteilen endliche Carbonfasern, Carbonfaserbündel oder deren Mischung isoliert, diese mit thermoplastischen Fremdfasern vermischt, in einem Krempelprozess flächig ablegt und ausrichtet, so dass ein Faserflor mit einer gezielten Orientierung der Fasern erzeugt wird, den man in wenigstens einem nachfolgenden Schritt unter Wärmeeinwirkung zu einem Plattenmaterial verpresst, gemäß einem Verfahren nach einem der Ansprüche 1 bis 8, **dadurch gekennzeichnet, dass** der Anteil des thermoplastischen Matrixmaterials im Halbzeug in einem Bereich von zwischen etwa 5 Gew.-% und etwa 95 Gew.-%, vorzugsweise bei etwa 30 Gew.-% bis etwa 70 Gew.-% liegt und dass die Carbonfasern, Carbonfaserbondel oder deren Mischung endliche Längen aufweisen und über eine Faserlängenverteilung verfügen, und wobei das plattenförmige Halbzeug eine Anisotropie der Verbundfestigkeiten und/oder Verbundsteifigkeiten in einem Bereich von 1:2 bis 1:7 aufweist.

10. Plattenförmiges Halbzeug nach Anspruch 9, **dadurch gekennzeichnet, dass** die Carbonfasern im Halbzeug so vorliegen, dass Anteile davon nicht das gesamte Halbzeug unterbrechungsfrei durchziehen.

11. Plattenförmiges Halbzeug nach einem der Ansprüche 9 oder 10, **dadurch gekennzeichnet, dass** dieses aus endlichen Carbonfasern, Carbonfaserbündeln oder deren Mischung und weiteren endlichen Verstärkungsfasern hergestellt ist, insbesondere ausgewählt aus Naturfasern, para-Aramidfaserstoffen und Glasfasern.

12. Plattenförmiges Halbzeug nach einem der Ansprüche 9 bis 11, **dadurch gekennzeichnet, dass** dieses mit endlosen Verstärkungsfasern wie Endloskarbonrovings, para-Aramid- und/oder Glasfilamentgarnen in Form von Fäden, Gelegen, Geweben oder Gittern kombiniert wird.

## Claims

1. Method for producing a flat semi-finished product made of a fibre composite material, containing fibres and at least one thermoplastic matrix material, fibres being isolated from fibre-containing waste or used parts, mixed with thermoplastic fibres and laid flat in a carding process such that a fibrous web is produced, which is compressed, under the influence of heat, in at least one subsequent step so as to form a sheet material,
**characterised in that** finite carbon fibres, carbon fibre bundles or a mixture thereof are isolated from waste or used parts containing carbon fibres, are mixed with thermoplastic foreign fibres, laid flat and aligned in a carding process such that a fibrous web is produced in which the fibres are oriented in a specific manner and which is compressed, under the influence of heat, in at least one subsequent step so as to form a sheet material, thermoplastic foreign fibres being added during the carding process in order to obtain a specific and high longitudinal alignment of the carbon fibres, said foreign fibres being added in a mixing ratio and/or with a fibre geometry that allows a fibre anisotropy in a range of at least 1:2 to be obtained in the fibrous web.

2. Method according to claim 1, **characterised in that** the thermoplastic foreign fibres that are added have a fibre length of from approximately 25 mm to approximately 120 mm, preferably of from approximately 40 mm to approximately 100 mm.

3. Method for producing a flat semi-finished product according to either claim 1 or claim 2, **characterised in that** a largely homogenous mixture of random thermoplastic bonding fibres and finite random carbon fibres, random carbon fibre bundles or a mixture thereof is aligned in a carding process and positioned so as to form a fibre mat, at least portions of the thermoplastic fibres being brought into an adhesive state under the influence of heat, compacted and compressed to form a sheet material and then cooled.

4. Method according to any of claims 1 to 3, **characterised in that** the carbon fibres, carbon fibre bundles or the mixture thereof that are used have an average fibre length of from 10 mm to 150 mm, preferably of from 25 mm to 150 mm.

5. Method according to any of claims 1 to 4, **characterised in that** at least one amount of carbon fibres which are the result of processing textile-like carbon waste and/or of recycling the material of CRP components is used, and one amount of chopped primary fibres (virgin material) is also optionally used.

6. Method according to any of claims 1, 2 or 4 to 6, **characterised in that** a mixture of carbon fibres, carbon fibre bundles or a mixture thereof and thermoplastic bonding fibres is produced in a fibre mixing process when the web is being formed.

7. Method according to any of claims 1 to 6, **characterised in that** a specific degree of orientation of initially directionally disorganised carbon fibres, carbon fibre bundles or a mixture thereof is produced using a carding machine such that, in a fibre composite material, an anisotropy of composite strength and/or composite stiffness in a range of from 1:1.5 to 1:10 is achieved.

8. Method according to any of claims 1 to 7, **characterised in that** an anisotropy of composite strength and/or composite stiffness is influenced by further unbonded web stretching after a process for laying a fibre web in layers to form web layering.

9. Flat semi-finished product made of a fibre composite material, produced from a fibre composite material, containing fibres and at least one thermoplastic matrix material, by finite carbon fibres, carbon fibre bundles or a mixture thereof being isolated from waste or used parts which contain carbon fibres, being mixed with thermoplastic foreign fibres, laid flat and aligned in a carding process such that a fibrous web is produced in which the fibres are oriented in a specific manner and which is compressed, under the influence of heat, in at least one subsequent step so as to form a sheet material, according to a method according to any of claims 1 to 8, **characterised in that** the proportion of thermoplastic matrix material in the semi-finished product is in a range of between approximately 5 wt.% and approximately 95 wt.%, preferably between approximately 30 wt.% and approximately 70 wt.%, and **in that** the carbon fibres, carbon fibre bundles or the mixture thereof have finite lengths and have a fibre length distribution, and the flat semi-finished product having an anisotropy of composite strength and/or composite stiffness in a range of from 1:2 to 1:7.

10. Flat semi-finished product according to claim 9, **characterised in that** the carbon fibres are present in the semi-finished product in such a way that portions thereof do not continuously pass through the entire semi-finished product.

11. Flat semi-finished product according to either claim 9 or claim 10, **characterised in that** it is produced from finite carbon fibres, carbon fibre bundles or a mixture thereof and additional finite strengthening fibres, in particular selected from natural fibres, para-aramid fibres and glass fibres.

12. Flat semi-finished product according to any of claims 9 to 11, **characterised in that** it is combined with infinite strengthening fibres, such as infinite carbon rovings, para-aramid and/or glass filament yarns, in the form of threads, laid scrims, woven fabrics or lattices.

## Revendications

1. Procédé destiné à la fabrication d'un produit semi-fini en forme de plaquette constitué d'un matériau composite en fibres, lequel contient des fibres et tout au moins un matériau de matrice en thermoplastique ;
dans lequel des fibres sont isolées à partir de déchets ou de pièces usagées qui contiennent des fibres, lesdites fibres sont mélangées avec des fibres en thermoplastique et sont déposées à plat durant un processus de cardage, de telle sorte qu'une nappe de fibres est ainsi produite, laquelle est comprimée sous l'effet de la chaleur pour donner lieu à un matériau en plaquette lors de tout au moins une phase consécutive ;
**caractérisé en ce que**
des fibres de carbone finies, des faisceaux de fibres de carbone ou leur mélange sont isolés à partir de déchets ou de pièces usagées qui contiennent des fibres de carbone, ceux-ci sont mélangés avec des fibres étrangères en thermoplastique, sont déposés à plat et alignés durant un processus de cardage, de telle sorte qu'une nappe de fibres avec une orientation ciblée des fibres est ainsi produite, laquelle est comprimée sous l'effet de la chaleur pour donner lieu à un matériau en plaquette lors de,tout au moins une phase consécutive ;
dans lequel des fibres étrangères en thermoplastique sont ajoutées durant le processus de cardage en vue de permettre un alignement longitudinal élevé et ciblé des fibres de carbone, dans un tel rapport de mélange et/ou avec une telle géométrie des fibres qu'une anisotropie des fibres dans une plage d'au moins 1:2 est obtenue dans la nappe de fibres.

2. Procédé selon la revendication 1, **caractérisé en ce que** les fibres étrangères en thermoplastique qui sont ajoutées présentent des longueurs de fibres comprises entre environ 25 mm et environ 120 mm, de préférence comprises entre environ 40 mm et environ 100 mm.

3. Procédé destiné à la fabrication d'un produit semi-fini en forme de plaquette selon la revendication 1 ou 2, **caractérisé en ce qu'**un mélange en grande partie homogène, lequel est constitué à partir de fibres de liaison enchevêtrées en thermoplastique et de fibres de carbone enchevêtrées et finies, de faisceaux de fibres de carbone enchevêtrés ou de leur mélange, est aligné durant un processus de cardage et déposé pour donner lieu à un mat de fibres, au moins certaines parties des fibres en thermoplastique sont amenées à un état collant sous l'effet de la chaleur, puis sont compactées et comprimées pour donner lieu à un matériau en plaquette et sont ensuite refroidies.

4. Procédé selon l'une des revendications 1 à 3, **caractérisé en ce que** les fibres de carbone, les faisceaux de fibres de carbone utilisés ou leur mélange présentent une longueur moyenne de fibre comprise entre 10 mm et 150 mm, de préférence comprise entre 25 mm et 150 mm.

5. Procédé selon l'une des revendications 1 à 4, **caractérisé en ce qu'**au moins une certaine proportion des fibres de carbone est utilisée, lesquelles sont issues du retraitement des déchets de carbone de nature textile et/ou du recyclage de matériau de composants en PRFC, et, le cas échéant, une certaine proportion de fibres primaires sectionnées (matière vierge) est également utilisée.

6. Procédé selon l'une des revendications 1, 2 ou 4 à 6, **caractérisé en ce qu'**un mélange constitué de fibres de carbone, de faisceaux de fibres de carbone ou de leur mélange, d'une part, et de fibres de liaison en thermoplastique, d'autre part, est produit pendant la formation du mat par l'intermédiaire d'un processus de mélange des fibres.

7. Procédé selon l'une des revendications 1 à 6, **caractérisé en ce qu'**un degré d'orientation ciblé des fibres de carbone, des faisceaux de fibres de carbone ou de leur mélange, lesquels se présentaient dans un premier temps sans aucune orientation définie, est obtenu au moyen d'une machine à carder, de telle sorte que, dans un matériau composite en fibres, une anisotropie de la solidité des liaisons et/ou de la rigidité des liaisons est atteinte dans une plage comprise entre 1:1,5 et 1:10.

8. Procédé selon l'une des revendications 1 à 7, **caractérisé en ce qu'**une anisotropie de la solidité des liaisons et/ou de la rigidité des liaisons est influencée par un étirement supplémentaire du nappe non tissée à la suite d'un processus de formation en plaquette d'une nappe de fibres en une stratification de nappes.

9. Produit semi-fini en forme de plaquette constitué d'un matériau composite en fibres, fabriqué à partir d'un matériau composite en fibres, lequel contient des fibres et tout au moins un matériau de matrice en thermoplastique, lequel produit semi-fini en forme de plaquette est fabriqué en isolant des fibres de carbone finies, des faisceaux de fibres de carbone ou leur mélange à partir de déchets ou de pièces usagées qui contiennent des fibres de carbone ; et dans lequel lesdites fibres de carbone finies, des faisceaux de fibres de carbone ou leur mélange sont mélangés avec des fibres étrangères en thermoplastique, puis sont déposés à plat et alignés durant un processus de cardage, de telle sorte qu'une nappe de fibres avec une orientation ciblée des fibres est ainsi produite, laquelle est comprimée sous l'effet de la chaleur pour donner lieu à un matériau en plaquette lors de tout au moins une phase consécutive, conformément à un procédé selon l'une des revendications 1 à 8 ;
**caractérisé en ce que**
la proportion du matériau de matrice en thermoplastique dans le produit semi-fini se situe dans une plage comprise entre environ 5 % en poids et environ 95 % en poids, de préférence dans une plage comprise entre environ 30 % en poids et environ 70 % en poids ; et
**caractérisé en ce que**
les fibres de carbone, les faisceaux de fibres de carbone ou leur mélange présentent des longueurs finies et disposent d'une répartition des fibres sur la longueur ; et
dans lequel le produit semi-fini en forme de plaquette présente une anisotropie de la solidité des liaisons et/ou de la rigidité des liaisons dans une plage comprise entre 1:2 et 1:7.

10. Produit semi-fini en forme de plaquette selon la revendication 9, **caractérisé en ce que** les fibres de carbone sont présentes dans le produit semi-fini de telle sorte que certaines parties d'entre elles ne traversent pas de manière continue la totalité du produit semi-fini

11. Produit semi-fini en forme de plaquette selon l'une des revendications 9 ou 10, **caractérisé en ce que** ledit produit semi-fini en forme de plaquette est fabriqué à partir de fibres de carbone finies, de faisceaux de fibres de carbone ou de leur mélange, ainsi qu'à partir d'autres fibres de renforcement finies, qui sont, en particulier, sélectionnées parmi le groupe constitué par les fibres naturelles, les matières fibreuses de para-aramide et les fibres de verre.

12. Produit semi-fini en forme de plaquette selon l'une des revendications 9 à 11, **caractérisé en ce que** ledit produit semi-fini en forme de plaquette est combiné, sous la forme de fils, de tissus non tissés, de tissus ou de treillis, avec des fibres de renforcement infinies, telles que des stratifils de carbone sans fin, des fils de para-aramide et/ou des fils de filament de verre.
